## Europäisches Patentamt

## European Patent Office

## Office européen des brevets

(19)

(11) Veröffentlichungsnummer: **0 157 236**
**B1**

(12)

# EUROPÄISCHE PATENTSCHRIFT

(45) Veröffentlichungstag der Patentschrift:
**21.09.88**

(21) Anmeldenummer: **85102803.5**

(22) Anmeldetag: **12.03.85**

(51) Int. Cl.⁴: **F 16 D 35/00,** F 16 H 1/455

(54) **Flüssigkeitsreibungskupplung, insbesondere für Ausgleichsgetriebe von Kraftfahrzeugen.**

(30) Priorität: **12.03.84 DE 3408977**

(43) Veröffentlichungstag der Anmeldung:
**09.10.85 Patentblatt 85/41**

(45) Bekanntmachung des Hinweises auf die Patenterteilung:
**21.09.88 Patentblatt 88/38**

(84) Benannte Vertragsstaaten:
**DE FR GB IT SE**

(56) Entgegenhaltungen:
**DE-A-2 209 879**
**DE-B-1 235 075**
**DE-B-1 288 361**
**DE-B-2 225 096**
**FR-A-2 074 860**
**GB-A-2 135 424**
**US-A-4 040 271**
**US-A-4 058 027**

(73) Patentinhaber: **BAYERISCHE MOTOREN WERKE
Aktiengesellschaft, Postfach 40 02 40 Petuelring
130 - AJ- 36, D-8000 München 40 (DE)**

(72) Erfinder: **Cigdem, Saffet, Eduard- Spranger-
Strasse 8, D-8000 München 45 (DE)**
Erfinder: **Lichnofsky, Rüdiger, Muggenthaler
Strasse 1, D-8033 Krailling (DE)**
Erfinder: **Martin, Harry, Wettersteinstrasse 20,
D-8027 Neuried (DE)**

(74) Vertreter: **Dexheimer, Rolf, Bayerische Motoren
Werke Aktiengesellschaft Postfach 40 02 40
Petuelring 130 - AJ- 21, D-8000 München 40 (DE)**

**Beschreibung**

Die Erfindung bezieht sich auf eine Flüssigkeitsreibungskupplung, insbesondere für Ausgleichsgetriebe von Kraftfahrzeugen nach dem Oberbegriff des Hauptanspruchs.

Solche Flüssigkeitsreibungskupplungen sind in der Lage, Dreh- bzw. Kupplungsmomente zu übertragen, sobald die Lamellensätze sich gegeneinander verdrehen. Der Grund hierfür liegt in der inneren Reibung des zähflüssigen Mediums. Je höher die Relativdrehzahl der Lamellenpakete ist, desto größere Momente lassen sich übertragen. Das übertragbare Moment verhält sich aber auch reziprok zu dem Lamellenabstand, also es steigt mit kleiner werdendem Abstand.

Durch diese Eigenschaft eignen sich Flüssigkeitsreibungskupplungen auch als Differentialsperren in Ausgleichsgetrieben von Kraftfahrzeugen. Der eine Lamellensatz ist dabei antriebsmäßig mit dem einen Abtriebszahnrad verbunden, während der andere Lamellensatz entweder in Antriebsverbindung mit dem Ausgleichskorb oder mit dem zweiten Abtriebszahnrad steht. Dabei werden in diesem Zusammenhang sowohl Ausgleichsgetriebe verstanden, die zwischen den beiden Halbachsen einer Antriebsachse - also sog. Achsdifferentiale - eingebaut sind, als auch solche, die zwischen zwei Antriebsachsen - kombiniert mit einem Verteilergetriebe - eines Vierradantriebes vorgesehen sind. Die Flüssigkeitskupplungen werden entweder in dem Aufbau des Ausgleichsgetriebes integriert oder als getrenntes Aggregat mit dem Ausgleichsgetriebe kombiniert.

Eine bekannte Flüssigkeitsreibungskupplung für die Anwendung in einem Kraftfahrzeug zeigt die US-A-4 058 027. Hier sind im eigentlichen Sinne zwei solcher Flüssigkeitskupplungen vorgesehen, die durch einen Ringkolben voneinander getrennt sind. Eine der Kupplungen wirkt ab einem bestimmten Betriebszustand auch noch als herkömmliche Reibungskupplung. Drehen bei dieser Anordnung die Antriebsräder unterschiedlich schnell, so bewirkt dies im Ausgleichsgetriebe das erwähnte Verdrehen der Lamellensätze. Durch die innere Reibung des zähflüssigen Mediums führt dieses Verdrehen zu einem Temperaturanstieg, der wiederum einen Druckanstieg in der Ringkammer bewirkt. Dabei steigt die Temperatur umso schneller an, je höher die Differenzdrehzahl zwischen den Lamellensätzen wird. Der ansteigende Druck bewegt den Ringkolben in axialer Richtung, der dadurch die Kupplungslamellen zusammenschiebt. Die Flüssigkeitsreibungskupplung kann dadurch ein immer größeres Drehmoment übertragen, was sich in Wirklichkeit als immer stärkeres Sperren des Ausgleichsgetriebes auswirkt. Bei der bekannten Ausführung wird demnach über den Temperaturanstieg in der Ringkammer das Ausgleichsgetriebe in Abhängigkeit der Differenzdrehzahl allmählich gesperrt.

Erhöhte Temperatur kann jedoch schädlich für das zähflüssige Medium sein. Es kann mit der Zeit die ihm innenwohnenden Eigenschaften verlieren, die für das einwandfreie Arbeiten der Flüssigkeitsreibungskupplung notwendig sind.

Der bekannten Flüssigkeitsreibungskupplung haftet noch ein weiterer Nachteil an, der besonders dann auftritt, wenn sie in einem Ausgleichsgetriebe für einen Vierradantrieb vorgesehen ist. Bei schneller Fahrt kommt es in einem solchen Fall in der Regel zu einer Differenz der Höhenlage des Fahrzeugaufbaues an der Vorder- und Hinterachse. Es ergeben sich dadurch an den Vorder- und Hinterrädern unterschiedliche dynamische Radhalbmesser mit der Folge, daß die zu den Rädern führenden Antriebsachsen unterschiedlich schnell drehen müssen. Im Ausgleichsgetriebe, das in diesem Fall dem Verteilergetriebe zugeordnet ist, führt dies wiederum zu einem gegenseitigen Verdrehen der Lamellensätze mit dem beschriebenen Temperaturanstieg und der daraus sich ergebenden teilweisen Sperrung des Ausgleichsgetriebes. Mit anderen Worten: In einer Fahrsituation, in der ein Sperren des Ausgleichsgetriebes nicht gewünscht ist, setzt durch die vorbekannte Flüssigkeitsreibungskupplung bereits ein solches Sperren ein. Die Folge ist ein Absinken des Wirkungsgrades sowie die Gefahr einer Schädigung des zähflüssigen Mediums infolge der permanenten erhöhten Temperatur.

Eine weitere Flüssigkeitsreibungskupplung zeigt die DE-A-22 09 879. Hier sind wiederum in einem bevorzugten Ausführungsbeispiel zwei Flüssigkeitsreibungskupplungen vorgesehen. Die eine Kupplung soll dabei in der beschriebenen Weise das Drehmoment übertragen, während die andere Flüssigkeitsreibungskupplung für die Verstellung des Lamellenabstands dient. Sie besteht hierzu aus zwei Teilen. Der erste Teil, der zugleich auch antriebsmäßig mit dem einen Lamellenpaket der ersten Flüssigkeitsreibungskupplung verbunden ist, bildet eine Ringraum aus, in dem der zweite als Nockenprofilscheibe ausgelegte Teil angeordnet ist. Im verbleibenden Zwischenraum der beiden Teile befindet sich das zähflüssige Medium, die Viskoflüssigkeit. Am Nockenprofil dieser Profilscheibe wälzen sich Ringkörper ab, die sich wiederum an einer Stellscheibe abstützen. Über weitere Zwischenglieder drückt die Stellscheibe auf das Lamellenpaket der ersten Flüssigkeitsreibungskupplung, das mit der zweiten Antriebsverbindung zugeordnet ist.

Tritt zwischen dem ersten Teil und dem zweiten Teil der zweiten Flüssigkeitsreibungskupplung eine Drehzahldifferenz auf, wälzen sich die Ringkörper an der Profilnockenscheibe ab und verlagern die Stellscheibe in Richtung Lamellenpaket. Dies wird dadurch zusammengedrückt und der Abstand zwischen den einzelnen Lamellen verkleinert sich.

Die bekannte Ausführung beansprucht verhältnismäßig viel Bauraum. Es ist Aufgabe der Erfindung, bei einer Flüssigkeitsreibungskupplung das Verändern des Kupplungslamellenabstands durch eine Stellscheibe vorzusehen, wobei eine kompakte Bauweise der Kupplung anzustreben ist.

Die Aufgabe wird erfindungsgemäß gelöst mit den Merkmalen des Hauptanspruchs. Vorteilhafte Ausgestaltungen der Erfindung ergeben sich aus den Unteransprüchen.

Wie bei der DE-A-22 09 879 bewirken bei der erfindungsgemäßen Flüssigkeitsreibungskupplung die Veränderung des Lamellenabstandes einmal die Scherkräfte, die zwischen dem zähflüssigen Medium und der Stellscheibe sowie der benachbarten Lamelle auftreten, zum anderen die Anlaufschräge. Die Scherkräfte steigen mit größer werdender Differenzdrehzahl. Durch die Scherkräfte versucht die benachbarte Kupplungsscheibe bei ihrer Drehung die Stellscheibe mitzunehmen. Diese wandert, verursacht durch die Anlaufschräge, bei steigenden Scherkräften immer mehr auf diese Kupplungslamelle zu. Die Kupplungslamellen werden insgesamt zusammengeschoben und damit ihr gegenseitiger Abstand verkleinert. Wie oben erwähnt, vermögen sie dadurch ein immer größeres Moment zu übertragen.

Die sich aufbauenden Scherkräfte hängen ebenfalls mit der inneren Reibung des zähflüssigen Mediums zusammen. Es wird sich demnach auch hier ein Temperaturanstieg einstellen. Da jedoch dieser Temperaturanstieg nicht zur Verstellung der Lamellen herangezogen wird, läßt sich durch Auswahl des Mediums und der Dimensionierung der Flüssigkeitsreibungskupplung der Temperaturanstieg in Grenzen halten, so daß keine Gefahr besteht für das Medium.

Für die Funktion der erfindungsgemäßen Kupplung ist es unerheblich, ob die Anlaufschräge dem Außen- oder Innenkörper zugeordnet ist. Sie muß lediglich so ausgeführt sein, daß sie in Achsrichtung der Kupplung ansteigt, um so ein axiales Auswandern der Stellscheibe bewirken zu können.

Besonders vorteilhaft ist es, wenn die Anlaufschräge nicht stetig ansteigt, sondern zunächst einen steileren, dann einen flacheren Anstieg aufweist. Dadurch eignet sich die erfindungsgemäße Kupplung besonders gut für das Verteilergetriebe eines Vierradantriebes, bei dem, wie bereits erwähnt, die Lamellensätze der Kupplung sich auch bei Geradeausfahrt mit höherer Geschwindigkeit gegeneinander verdrehen. Die für das Auswandern der Stellscheibe notwendigen Scherkräfte werden von der Steigung der Anlaufschräge bestimmt. Einerseits steigen die Scherkräfte einmal mit steigender Drehzahldifferenz zwischen den Lamellensätzen, andererseits mit kleiner werdendem Abstand zwischen Stellscheibe und der benachbarten Kupplungslamelle. Zur Überwindung des steileren Abschnitts der Anlaufschräge können die dazu notwendigen Scherkräfte im wesentlichen nur durch größer werdender Drehzahldifferenz erzeugt werden, da die Stellscheibe zunächst nicht merklich auswandert. Bei geeigneter Auslegung kann die erwähnte, bei schneller Geradeausfahrt auftretende Drehzahldifferenz noch zu klein sein, um die für die Überwindung des steileren Abschnitts notwendigen Scherkräfte zu erzeugen. Anders ausgedrückt: Bei dieser Drehzahldifferenz wandert die Stellscheibe nicht merklich aus, vermag daher auch nicht den Lamellenabstand insgesamt zu verringern, so daß auch das Kupplungsmoment klein bleibt und der Wirkungsgrad des Antriebsstrangs nicht merklich absinkt. Dieser Effekt läßt sich noch durch eine später näher dargestellte Schnappverbindung verstärken.

Der Drehsinn der einzelnen Lamellenpakete liegt nicht fest. Sie können, je nach Fahrsituation, sowohl in der einen als auch in der anderen Richtung drehen. Es ist deshalb zweckmäßig, jedem Drehsinn wenigstens eine Anlaufschräge zuzuordnen. Um die Wirkung der Anordnung zu erhöhen, ist es vorteilhaft, für jeden Drehsinn mehrere Anlaufschrägen vorzusehen.

In einer zweckmäßigen Ausführung ist die Anlaufschräge der Stellscheibe zugeordnet. Dabei kann die Anlaufschräge und Stellscheibe einstückig ausgeführt sein. Die Anlaufschräge kann sich in diesem Fall über einen Rollkörper, beispielsweise einer Kugel, an einem Bauteil abstützen, das wiederum verdrehfest der entsprechenden Antriebsverbindung zugeordnet ist. Es ist vorteilhaft, die Stellscheibe mit ihrer Anlaufschräge gegen die Nockenprofilscheibe zu drücken. Dadurch wird die Stellscheibe immer wieder in ihre Ausgangslage zurückgedrängt, wenn die Lamellensätze zum Stillstand kommen. Magnetische Elemente, die zweckmäßigerweise in der Stellscheibe eingesetzt sind, können dieses Zurückstellen noch unterstützen. Durch die Verwendung solcher Elemente ergibt sich auch der Vorteil, daß die Rückstellfeder insgesamt schwächer dimensioniert werden kann. Das wirkt sich besonders günstig aus bei einer Rückstellfeder, die aus einzelnen Distanzfedern gebildet wird, die zwischen den Kupplungslamellen angeordnet sind.

Zu einer kompakten Bauweise trägt dazu bei, daß die Nockenprofilscheibe an einer Radialwand befestigt ist. In einer besonders einfachen Ausführung fällt die Nockenprofilscheibe weg und die Anlaufschräge ist an einer Radialwand der Ringkammer ausgebildet. Dadurch ergibt sich ein noch kompakterer Aufbau.

Bewegt sich die Stellscheibe in Richtung Kupplungslamelle, muß sie das zähflüssige Medium verdrängen. Um hier ein gezieltes Verhalten zu erreichen, ist es zweckmäßig, in der Stellscheibe wenigstens eine Durchgangsbohrung vorzusehen, durch die das Medium fließen kann. Über die Durchmessergröße läßt sich der Durchsatz steuern bzw. drosseln und damit die Auswanderungsgeschwindigkeit der Stellscheibe beeinflussen.

Nachfolgend wird ein vorteilhaftes Ausführungsbeispiel der Erfindung beschrieben und in der dazugehörigen Zeichnung dargestellt. Es zeigen

Fig. 1 mehrere Kupplungsmomentenverläufe einer Flüssigkeitsreibungskupplung;

Fig. 2 eine erfindungsgemäße Flüssigkeitsreibungskupplung im Schnitt;

Fig. 3 die Kupplung nach Figur 2 in Schnittansicht längs des Schnitts III-III;

Fig. 4 eine abgewickelte Darstellung der Stellscheiben- und Lamellenanordnung;

Fig. 5 und 6 Anlaufschrägen mit verschiedenen Anstiegswinkeln;

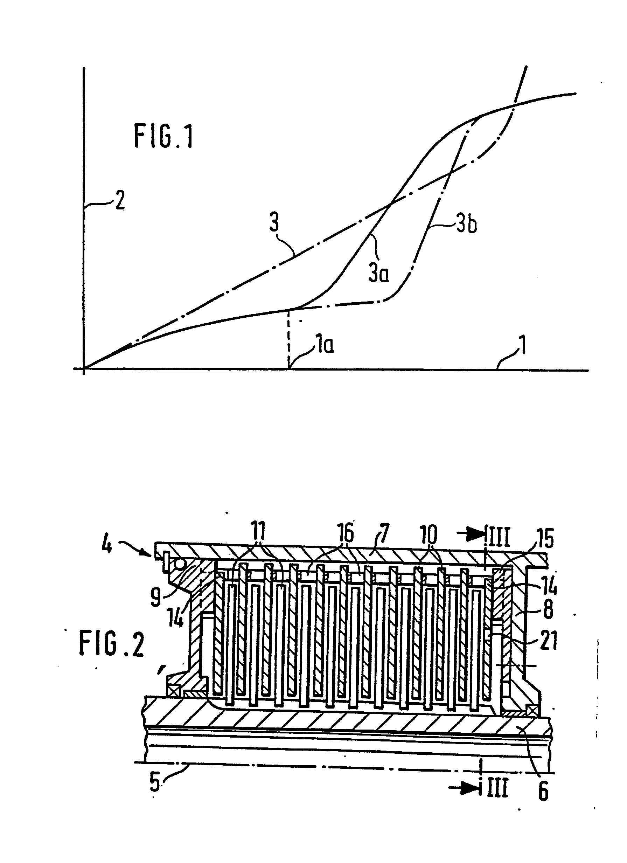

Bei dem Diagramm nach Figur 1 ist auf der Abszisse 1 die Relativdrehzahl zwischen den einzelnen Lamellensätzen aufgetragen, auf der Ordinate 2 das übertragbare Kupplungsmoment. Die Kurve 3 zeigt den stetigen Anstieg des Kupplungsmoments bei größer werdender Differenzdrehzahl. Dabei ändert sich ebenso kontinuierlich der Lamellenabstand, er wird immer kleiner.

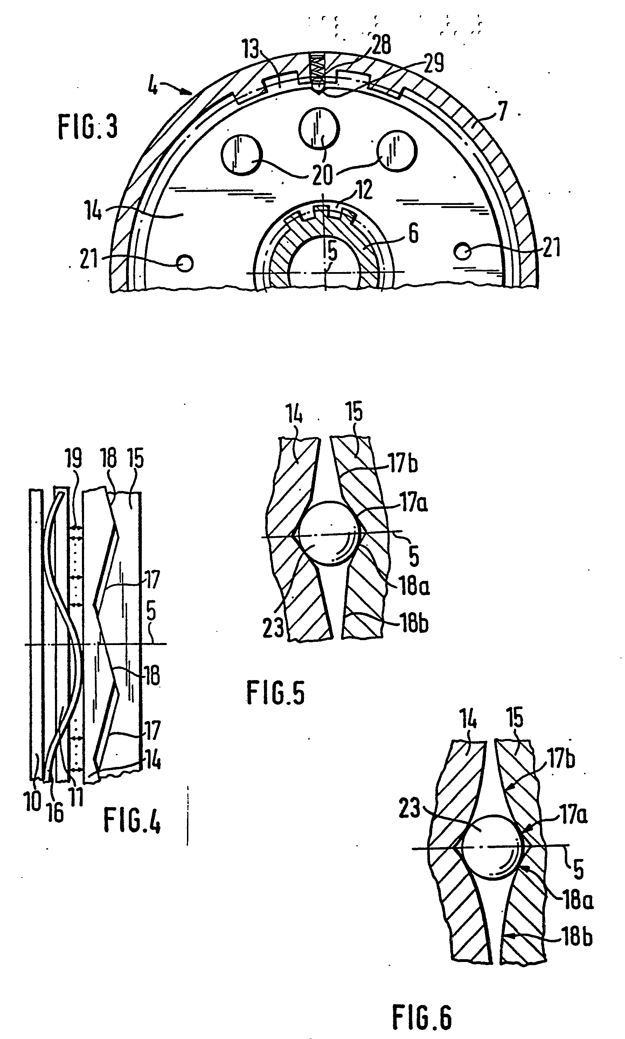

Eine solche Drehmomentcharakteristik erhält man mit einer Flüssigkeitsreibungskupplung nach den Figuren 2 und 3. In Figur 2 ist in geschnittener Darstellung lediglich der sich an die Kupplungsachse 5 anschließende obere Abschnitt der Flüssigkeitsreibungskupplung 4 dargestellt. Der untere Abschnitt wurde der Einfachheit halber weggelassen. Ganz allgemein ist immer die Kupplungsachse 5 gemeint, wenn bei dem hier behandelten Gegenstand von Achse oder Achsrichtung gesprochen wird. Die Flüssigkeitsreibungskupplung 4 ist für ein Ausgleichsgetriebe eines Kraftfahrzeuges vorgesehen. Sie ist aber nicht auf den Kraftfahrzeugsektor beschränkt; sie läßt sich ganz allgemein in der Antriebstechnik verwenden. Die die Flüssigkeitsreibungskupplung 4 umgebenden Teile des Ausgleichsgetriebes sind nicht gezeichnet.

Die Flüssigkeitsreibungskupplung 4 weist eine geschlossene Ringkammer auf, die gebildet ist aus einem zylindrischen Innenkörper 6, einem dazu koaxial angeordneten und verdrehbar auf dem zylindrischen Innenkörper 6 gehaltenen trommelförmigen Außenkörper 7 und zwischen den Innenkörper 6 und Außenkörper 7 angeordneten Radialwänden 8 und 9. Dabei ist die Radialwand 8 einstückig mit dem Außenkörper 7 verbunden und die Radialwand 9 getrennt vom Innenkörper 6 und Außenkörper 7 ausgeführt. Die Ringkammer ist nach außen abgedichtet und in ihr befindet sich ein zähflüssiges Medium, das beispielsweise aus einem Silikonöl bestehen kann. Dabei ist die Ringkammer nahezu vollständig mit diesem Medium gefüllt.

Die Ringkammer enthält zwei ineinandergreifende Lamellensätze mit Kupplungslamellen 10 und 11. Die Kupplungslamellen 10 und 11 lassen sich um die Kupplungsachse 5 drehen, die sich auch zugleich als die gemeinsame Drehachse von Innenkörper 6 und Außenkörper 7 darstellt. Die ringförmigen Kupplungslamellen 10 und 11 sind abwechselnd aufeinanderfolgend und mit Abstand zueinander angeordnet. Dabei stehen die Kupplungslamellen 10 über eine Keilverzahnung mit dem Außenkörper 7 in Antriebsverbindung, während die Kupplungslamellen 11 über eine entsprechende Verzahnung mit dem Innenkörper 6 antriebsmäßig verbunden sind. Die Keilnuten des Innenkörpers 6 und des Außenkörpers 7 sind in Figur 3 mit 12 und 13 angedeutet.

In der Ringkammer ist ebenfalls ein Verschiebeglied angeordnet, das in Figur 2 aus einer ringförmigen, um die Kupplungsachse 5 drehbaren Stellscheibe 14 besteht. Die Stellscheibe 14 läßt sich gegenüber dem Innenkörper 6 und, wenn auch nur in bestimmten Grenzen, dem Außenkörper 7 verdrehen. Außerdem liegt die Stellscheibe 14 der letzten Kupplungslamelle 11 des einen Kupplungssatzes mit Abstand gegenüber. Mit der anderen Seite steht die Stellscheibe 14 in Kontakt mit einem als Nockenprofilscheibe ausgebildeten Bauteil 15, das über eine angedeutete Schraubverbindung mit der Radialwand 8 verbunden ist. Das Bauteil 15 kann aber auch einstückig mit dieser Radialwand 8 ausgeführt sind. In der Figur 2 ist jeder Radialwand 8, 9 eine solche Stellscheibe 14 zugeordnet; im weiteren Verlauf der Beschreibung wird aber nur die an der Radialwand 8 betrachtet. Für die andere gelten die Ausführungen sinngemäß.

Zwischen den einzelnen Kupplungslamellen 10 sind Distanzfedern 16 vorgesehen, die die Kupplungslamellen auf Abstand halten. Zusätzlich oder ausschließlich können solche Bestandsfedern auch zwischen den Kupplungslamellen 11 angeordnet sein.

Figur 4 zeigt die Ringkammer von oben im Bereich der Stellscheibe 14 in abgewickelter Darstellung. Die Zylinderwand des Außenkörpers 7 ist entfernt. Das Bauteil 15 weist an seiner einen Seite, die der Stellscheibe 14 zugewandt und im wesentlichen senkrecht zur Kupplungsachse steht, mehrere am Umfang verteilte Anlaufschrägen 17, 18 auf. Die Anlaufschrägen sind dem einen Drehsinn zugeordnet, die Anlaufschrägen 18 dem anderen. Beide Arten von Anlaufschrägen steigen in Achsrichtung der Kupplungsachse 5 an. Die Stellscheibe 14 weist an ihrer, dem Bauteil 15 zugewandten Seite eine den Anlaufschrägen 17, 18 nachgebildete Form auf und wird mit dieser über die Distanzfeder 16 an das Bauteil 15 gedrückt.

Die Vorrichtung arbeitet in folgender Weise: Im Normalzustand, wenn sich also die Kupplungslamellen 10 und 11 nicht gegenseitig verdrehen, verdreht sich auch die Stellscheibe 14 nicht gegenüber der Kupplungslamelle 11. Tritt nun eine Fahrsituation ein, bei der sich die Kupplungslamellen gegenseitig verdrehen, wird die Stellscheibe 14 zunächst über das Bauteil 15 und die Radialwand 8 vom Außenkörper 7 mitgenommen. Sie dreht sich dadurch relativ zur Kupplungsscheibe 11. Durch das zähflüssige Medium werden Scherkräfte zwischen der Kupplungsscheibe 11 und der Stellscheibe 14 aufgebaut, die in Figur 4 symbolisch mit den Pfeilen 19 angedeutet sind. Diese Scherkräfte versuchen nun die Stellscheibe 14 in Drehsinn der Kupplungsscheibe 11 mitzunehmen. Dabei gleitet die Stellscheibe 14 an der Anlaufschräge 18 und wird axial in Richtung Kupplungslamelle 11 gedrückt. Der Abstand zwischen diesen Bauteilen verringert sich und mit ihm alle Abstände zwischen den einzelnen Kupplungslamellen 11 und 10. Durch die kleiner werdenden Lamellenabstände steigt das übertragbare Moment zwischen dem Innenkörper 6 und dem Außenkörper 7 bis schließlich beide quasi starr miteinander verbunden sind. Um ein unbegrenztes Auswandern der Stellscheibe 14 zu unterbinden, weist sie nicht gezeichnete Anschläge auf.

Die Rückstellung der Stellscheibe 14 übernehmen die Distanzfedern 16. Aus Figur 3 sind angedeutet magnetische Elemente 20 erkennbar, die in der Stellscheibe 14 sitzen und die diese Rückstellung noch unterstützen.

Wie bereits erwähnt, zeigt die Kurve 3 in Figur 1 den Drehmomentverlauf der Flüssigkeitsreibungskupplung nach Figur 2 bis 4. Um die Steigung dieser Kurve zu verändern, können in der Stellscheibe 14 Drosselbohrungen 21 (Figur 2 und 3) vorgesehen sein.

In den Figuren 5 und 6 sind besondere Ausbildungen der Anlaufschrägen dargestellt. Zunächst einmal weisen hier sowohl die Stellscheibe 14 als auch das Bauteil 15 (vgl. Figur 2) jeweils entsprechende Anlaufschrägen 17, 18 auf. Jede Anlaufschräge 17, 18 unterteilt sich in ein anfänglich steiler ansteigenden Abschnitt 17a, 18a, der dann in einen flachen Abschnitt 17b, 18b übergeht. In Figur 5 werden diese Abschnitte durch zwei aneinanderstoßende ebene Flächen erzeugt, in Figur 6 durch unterschiedliche Radien. Durch so ausgebildete Anlaufschrägen 17, 18 wird ein Drehmomentverlauf erreiht, wie er in Figur 1 mit 3a bezeichnet ist. Das folgt daraus, daß die Zuwächse an Scherkräften und damit die Zunahme der Differenzdrehzahl der Lamellensätze größer sein muß, solange sich die Kugel 23 in dem steileren Abschnitt 17a, 18a der Anlaufschräge 17, 18 befindet. Etwa aber der Drehzahl 1a (Figur 1) geht die Kugel 23 in den flacheren Abschnitt 17b, 18b über.

In Figur 1 zeigt desweiteren die Kurve 3b einen noch ausgeprägteren Verlauf in bezug auf die Drehzahl 1a. Dieser Verlauf wird erreicht mit einer Schnappvorrichtung, wie sie in Figur 3 dargestellt ist. Im Zylindermantel des Außenkörpers 7 sind am Umfang ein oder mehrere federbelastete Kugeln 28 gehalten, die in entsprechende Kerben 29 der Stellscheibe 14 greifen. Bei dieser Anordnung bewegt sich die Stellscheibe 14 erst, wenn die Scherkräfte so groß sind, daß sie die Kugeln 28 aus den Kerben 29 verdrängen können. Bei entsprechender Auslegung erfolgt dies bei der Drehzahl 1a. Diese Schnappverbindung kann auch in Verbindung mit den Anlaufschrägen 17, 18 nach den Figurn 5 und 6 verwendet werden.

**Patentansprüche**

1. Flüssigkeitsreibungskupplung, insbesondere für Ausgleichsgetriebe von Kraftfahrzeugen, bei der eine geschlossene, mit zähflüssigem Medium gefüllte Ringkammer gebildet ist aus einem zylindrischen Innenkörper (6), einem dazu koaxial angeordneten und verdrehbaren, trommelförmigen Außenkörper (7) und aus Radialwänden (8, 9) zwischen Innen- und Außenkörper und bei der die Ringkammer ineinandergreifende Lamellensätze enthält mit um die gemeinsame Achse von Innen- und Außenkörper drehbaren ringförmigen Kupplungslamellen (10, 11), die abwechseln aufeinanderfolgend und mit Abstand zueinander angeordnet sind, während die Kupplungslamellen (11) eines Lamellensatzes mit dem Innenkörper (6) und die des anderen Lamellensatzes mit dem Außenkörper (7) in Antriebsverbindung stehen, und die eine in der Ringkammer angeordnete, auf den Lamellenabstand wirkende, axial verlagerbare und als Umlaufkörper ausgebildete, ringförmige Stellscheibe (14) aufweist, die einerseits über das zähflüssige Medium von der einen Antriebsverbindung beaufschlagt wird und andererseits über mindestens eine Anlaufschräge (17, 18) mit der anderen Antriebsverbindung zusammenwirkt, dadurch gekennzeichnet, daß die Stellscheibe (14) direkt auf wenigstens eine Lamelle (11) der einen Antriebsverbindung wirkt und daß mindestens eine mit den Anlaufschrägen (17, 18) zusammenarbeitende Nockenprofilscheibe (Bauteil 15) mit der Innenseite einer der Radialwände (8, 9) verbunden ist.

2. Kupplung nach Anspruch 1, dadurch gekennzeichnet, daß die Stellscheibe (14) über eine Schnappverbindung bis zu einer vorbestimmten Drehzahldifferenz der Lamellensätze in ihrer Ausgangsstellung gehalten ist.

3. Kupplung nach Anspruch 2, dadurch gekennzeichnet, daß der Zylindermantel des Außenkörpers (7) wenigstens ein federbelastetes Element (28) aufweist, das in eine an der Umfangsfläche der Stellscheibe (14) vorgesehene Kerbe (29) eingreift.

4. Kupplung nach einem der Ansprüche 1 bis 3, dadurch gekennzeichnet, daß die Stellscheibe (14) im Bereich der Anlaufschräge (17, 18) magnetische Elemente (20) aufweist.

## Claims

1. A fluid friction clutch, especially for differential gears of motor vehicles, in which a closed annular chamber filled with viscous medium is formed from a cylindrical inner body (6), an outer body (7) of drum form arranged coaxially and rotatable in relation thereto, and from radial walls (8, 9) between inner and outer bodies, and in which the annular chamber contains inter-engaging sets of plates with annular clutch plates (10, 11 rotatable about the common axis of inner and outer bodies, which clutch plates are arranged in alternating sequence and with spacing from one another, while the clutch plates (11) of one plate set are in drive connection with the inner body (6) and those of the other plate set are in drive connection with the outer body (7), and which comprises an axially-displaceable annular setting disc (14) arranged in the annular chamber, formed as a body of rotation and acting upon the inter-plate distance, which setting disc for the one part is subject to the action of the one drive connection, through the viscous medium, and for the other part cooperates through at least one abutting slope (17, 18) with the other drive connection, characterised in that the setting disc (14) acts directly on at least one plate (11) of the one drive connection and that at least one cam-profiled disc (component 15) cooperating with the abutting slopes (17, 18) is connected with the inner side of one of the radial walls (8, 9).

2. A clutch according to Claim 1, characterised in that the setting disc (14) is held in its initial position by means of a snap connection until there is a predetermined difference of rotation rates of the plates.

3. A clutch according to Claim 2, characterised in that the cylindrical outer shell of the outer body (7) comprises at least one spring-loaded element (28) which engages in a groove (29) provided on the circumferential surface of the setting disc (14).

4. A clutch according to any one of Claims 1 to 3, characterised in that the setting disc (14) comprises magnetic elements (20) in the region of the abutting slopes (17, 18).

## Revendications

1. Accouplement à frottement visqueux, notamment pour des différentiels de véhicules automobiles, accouplement dans lequel une chambre annulaire fermée, remplie d'un milieu visqueux, est constituée par une structure interne cylindrique (6), une structure externe en forme de tambour (7) disposée co-axialement par rapport à la structure interne et susceptible de tourner, et dans des parois radiales (8, 9) entre la structure interne et la structure externe, la chambre annulaire contenant des jeux de lamelles s'interpénétrant avec des lamelles de couplage (10, 11) de forme annulaire susceptibles de tourner autour de l'axe commun de la structure interne et de la structure externe, ces lamelles se succédant alternativement et étant disposées à une certaine distance les unes des autres, tandis que les lamelles de couplage (11) d'un jeu de lamelles, sont en liaison d'entraîement avec la structure interne (6) et que l'autre jeu de lamelles est en liaison d'entraînement avec la structure externe (7), l'accouplement comportant un disque de réglage (14) de forme annulaire disposé dans la chambre annulaire, revêtant la forme d'une structure de révolution, susceptible d'être déplacé axialement et agissant sur la distance entre les lamelles, ce disque étant sollicité, d'une part, par l'intermédiaire du milieu visqueux par l'une des liaisons d'entraînement et coopérant, d'autre part, avec l'autre liaison d'entraînement par l'intermédiaire d'au moins une rampe d'accostage (17, 18), accouplement caractérisé en ce que le disque de réglage (14) agit directement sur au moins une lamelle (11) de l'une des liaisons d'entraîment et que, au moins un disque profilé à came (pièce constitutive 15) coopérant avec les rampes d'accostage (17, 18) est relié à la face interne de l'une des parois radiales (8, 9).

2. Accouplement selon la revendication 1, caractérisé en ce que le disque de réglage (14) est maintenu dans sa position de départ jusqu'à une différence de vitesse de rotation prédéterminée des jeux de lamelles, par l'intermédiaire d'un dispositif d'encliquetage.

3. Accouplement selon la revendication 2, caractérisé en ce que l'enveloppe cylindrique de la structure externe (7) comporte au moins un élément (28) sollicité par un ressort qui vient en prise dans une encoche (29) prévue sur la surface périphérique du disque de réglage (14).

4. Accouplement selon une des revendications 1 à 3, caractérisé en ce que le disque de réglage (14) comporte dans la zone des rampes d'accostage (17, 18) des éléments magnétiques (20).

## FIG.1

2

3

3a

3b

1a

1

## FIG.2

4

11   16   7   10   III   15

9

14

14

8

21

5

III   6

FIG.3

FIG.4

FIG.5

FIG.6